# DEMANDE DE BREVET EUROPEEN

(11) **EP 4 145 002 A1**
(43) Date de publication de la demande: **08.03.2023**
(21) Numéro de dépôt: 22193317.9
(22) Date de dépôt: 31.08.2022
(51) Int. Cl.: F16B 5/00, F16B 5/06, F16B 12/12, A47B 47/04, A47B 73/00

(54) **SYSTÈME D'ASSEMBLAGE ENTRE DES BORDURES D'EXTRÉMITÉS D'AU MOINS DEUX PANNEAUX ET CONSTRUCTION DE PANNEAUX OBTENUE**

(30) Priorité: 01.09.2021 FR 2109150
(71) Demandeur: FPC, 49600 Beaupreau-en-Mauges (FR)
(72) Inventeur: BUFFARD, François, 49300 CHOLET (FR)
(74) Mandataire: Jacobacci Coralis Harle

(57) **Abrégé**

La présente invention concerne un système d'assemblage entre des bordures d'extrémités (1A, 2A) d'un premier panneau (1) et d'un deuxième panneau (2).

Dans ce système d'assemblage, les bordures d'extrémités des deux panneaux (1, 2) comprennent des tenons (13, 23) encadrés par des mortaises (14, 24).

Les tenons (13, 23) de l'un des panneaux (1, 2) comprennent chacun une face d'appui (134, 234) destinée à venir prendre appui contre l'un des fonds de mortaise (141, 241) de l'autre panneaux (1, 2).

Les tenons (13, 23) comprennent une gorge de verrouillage (135, 235) ménagée dans leur face (133, 233) qui est opposée à ladite face d'appui (134, 234), lesquelles gorges de verrouillage (135, 235) sont adaptées pour que leurs axes (1351, 2351) soient alignés lorsque les tenons (13, 23) de l'un des panneaux (1, 2) sont en appui contre les fonds de mortaises (141, 241) de l'autre panneaux (1, 2).

Et le système d'assemblage comprend encore une clavette longitudinale de verrouillage (3) adaptée pour venir se loger dans les gorges de verrouillage (135, 235) alignées.

## Description

### Domaine technique de l'invention

La présente invention concerne les techniques d'assemblage entre des bordures d'extrémités de panneaux, en particulier pour la réalisation de constructions dans les domaines de la menuiserie, de l'agencement ou de l'ameublement.

### Etat de la technique

On connait de nombreuses techniques pour assembler entre elles les extrémités de deux panneaux, telles que le cloutage, le vissage, le collage, l'assemblage de type tenon-mortaise, de type queue d'aronde ou au moyen de tourillons associés à de la colle et/ou des agrafes.

Cependant, les techniques actuelles nécessitent bien souvent des temps de montage importants et du matériel de montage sophistiqué.

Les assemblages obtenus ne sont pas toujours démontables, ou ne sont pas facilement démontables.

En outre, les techniques connues ne permettent pas facilement d'obtenir des assemblages esthétiques de plus de deux panneaux.

### Présentation de l'invention

Afin de remédier à au moins certains des inconvénients précités de l'état de la technique, la présente invention propose un système d'assemblage entre les extrémités d'au moins un premier panneau et un deuxième panneau, lesquels premier panneau et deuxième panneau comprennent chacun un plan de panneau et deux faces parallèles séparées par une épaisseur de panneau,
lesquels plans de panneau desdits premier panneau et deuxième panneau sont décalés angulairement,
lequel premier panneau comprend une bordure d'extrémité comprenant au moins une mortaise de premier panneau encadrée par deux tenons de premier panneau,
lequel deuxième panneau comprend une bordure d'extrémité comprenant au moins un tenon de deuxième panneau encadré par deux mortaises de deuxième panneau,
lesquelles mortaises de premier et de deuxième panneaux comprennent chacun un fond de mortaise,
lesquels tenons de l'un desdits panneaux comprennent chacun une face d'appui destinée à venir prendre appui contre l'un desdits fonds de mortaise de l'autre desdits panneaux,
ce système d'assemblage étant caractérisé par le fait que
lesdits tenons desdits premier et deuxième panneaux comprennent une gorge de verrouillage qui s'étend sur toute leur longueur selon un axe de gorge,
lesquelles gorges de verrouillage sont ménagées dans la face desdits tenons qui est opposée à ladite face d'appui,
lesquelles gorges de verrouillage sont adaptées pour que lesdits axes de gorge soient alignés lorsque lesdits tenons de l'un desdits premier ou deuxième panneaux sont en appui contre lesdits fonds de mortaises de l'autre desdits panneaux,
et par le fait qu'il comprend une clavette longitudinale de verrouillage adaptée pour venir se loger dans lesdites gorges de verrouillage alignées, et assembler lesdits premier et deuxième panneaux.

Un tel système d'assemblage ne nécessite pas d'outillage complexe pour sa mise en œuvre (un simple marteau ou maillet suffit pour la mise en place de la clavette longitudinale). Ce système d'assemblage peut être monté et démonté sans dégradation, de manière simple et rapide.
De plus, il présente un caractère évolutif et à partir d'une structure de base, des panneaux complémentaires peuvent être rapportés selon le même principe.
Ce système d'assemblage présente également une esthétique originale.

D'autres caractéristiques non limitatives et avantageuses du système d'assemblage conforme à l'invention, prises individuellement ou selon toutes les combinaisons techniquement possibles, sont les suivantes :
- La section des gorges de verrouillage correspond à une partie de la section de la clavette longitudinale de verrouillage.
- Les gorges de verrouillage ont une section demi-circulaire, et la clavette longitudinale de verrouillage a une section circulaire.
- Les axes de gorge s'étendent dans le plan de la face des tenons qui est opposée à la face d'appui. Une telle particularité permet d'obtenir un assemblage esthétique de deux à quatre panneaux au moyen d'une même clavette de verrouillage.
- La distance entre l'axe de gorge et la projection orthogonale de cet axe de gorge sur le plan du fond de mortaise d'un panneau est égale à l'épaisseur de panneau de l'autre panneau.
- Sur chaque panneau, les fonds de mortaise s'étendent dans un plan perpendiculaire au plan de panneau, les plans de panneaux desdits premier et deuxième panneaux s'étendant perpendiculairement entre eux.
- La clavette longitudinale de verrouillage assure l'assemblage de quatre panneaux dont les plans de panneaux sont décalés de 90°, les tenons et mortaises des couples de panneaux dont les plans de panneaux s'étendent parallèlement entre eux étant disposés en vis-à-vis.

La présente invention concerne encore une construction de panneaux comprenant une pluralité de panneaux assemblés entre eux, des bordures d'extrémités d'au moins deux de ces panneaux étant assemblées entre elles par un système d'assemblage tel que défini ci-dessus.

Cette construction de panneaux peut comprendre plusieurs systèmes d'assemblage tels que définis ci-dessus, chacun par exemple pour l'assemblage de deux panneaux ou de quatre panneaux.

La construction de panneaux peut consister en une structure d'étagère.
Alors, selon un mode de réalisation, la structure d'étagère peut se présenter sous la forme d'une pluralité de compartiments juxtaposés, par exemple pour le rangement de bouteilles, au moins certains desdits compartiments ayant une forme générale carrée, constitués par l'assemblage de quatre panneaux, et disposés avec une diagonale horizontale et une diagonale verticale.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
La figure 1 est une vue en perspective illustrant le principe d'un système d'assemblage conforme à l'invention, avant l'assemblage des bordures d'extrémités des deux panneaux par la clavette longitudinale de verrouillage ;
La figure 2 est une vue de face montrant le système d'assemblage de la figure 1, après l'assemblage des deux panneaux par la clavette longitudinale de verrouillage ;
La figure 3 est une vue de face, avant assemblage, qui illustre le même principe de système d'assemblage, ici pour l'assemblage des bordures d'extrémités de quatre panneaux par une même clavette longitudinale de verrouillage ;
La figure 4 est une vue de face montrant le système d'assemblage de la figure 3, après l'assemblage des quatre panneaux par la clavette longitudinale de verrouillage ;
La figure 5 est une vue de face d'une construction de panneaux de type structure d'étagère comprenant une pluralité de panneaux dont des bordures d'extrémités sont assemblées entre elles selon le système d'assemblage conforme à l'invention.

Il est à noter que, sur ces figures, les éléments structurels et/ou fonctionnels communs aux différentes variantes peuvent présenter les mêmes références.

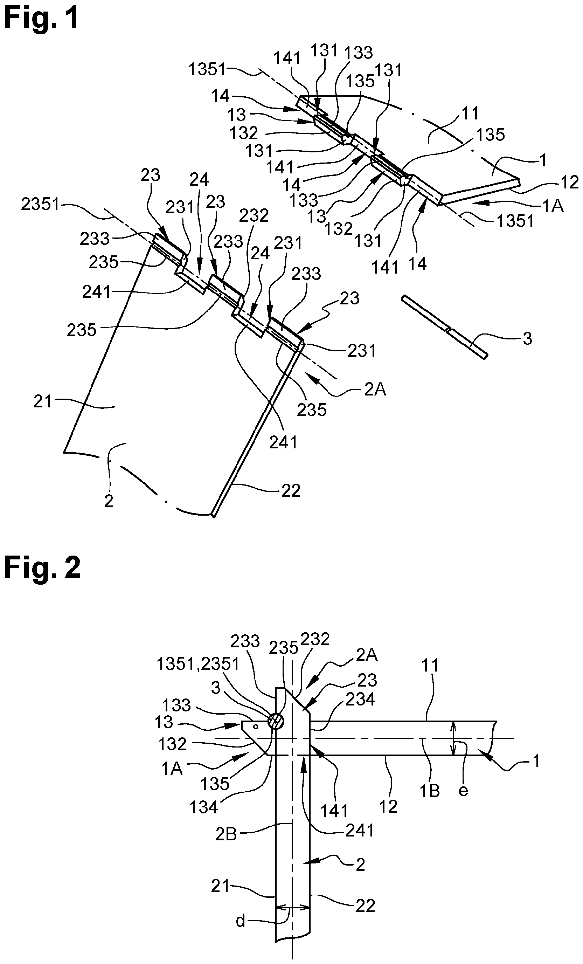

Les figures 1 et 2 illustrent un mode de réalisation possible du système d'assemblage conforme à l'invention, ici pour l'assemblage d'une bordure d'extrémité 1A d'un premier panneau 1, avec une bordure d'extrémité 2A d'un deuxième panneau 2.

Les deux bordures d'extrémités 1A, 2A à assembler des deux panneaux 1 et 2 sont des bordures rectilignes.

Les deux panneaux 1 et 2 sont des panneaux plans, en particulier des panneaux en bois, mais d'autres matériaux peuvent être envisagés (par exemple des matériaux composites ou métalliques).

Ces deux panneaux 1 et 2 comprennent chacun un plan de panneau, respectivement 1B, 2B, et deux faces parallèles, respectivement 11, 12 et 21, 22.

Les deux faces parallèles 11 et 12 du premier panneau 1 sont séparées par une épaisseur de panneau e ; et les deux faces parallèles 21 et 22 du deuxième panneau 2 sont séparées par une épaisseur de panneau d.

Les épaisseurs de panneaux e et d sont de préférence identiques mais elles peuvent être différentes. Ces épaisseurs peuvent par exemple être comprises entre 1 et 3 cm.

Dans l'assemblage recherché, les plans de panneau 1B et 2B des premier panneau 1 et deuxième panneau 2 sont décalés angulairement (ici de 90°).

Les bordures d'extrémité 1A et 2A du premier panneau 1 et deuxième panneau 2 comprennent des tenons 13, 23 en saillie, séparées par des mortaises 14, 24.

Ces tenons 13, 23 et ces mortaises 14, 24 sont complémentaires sur les deux bordures de panneaux 1A, 2A.

Les tenons 13, 23 de l'un des panneaux 1, 2 viennent s'emboiter dans les mortaises 14, 24 de l'autre panneau 1, 2 ; et l'assemblage est verrouillé au moyen d'une clavette longitudinale de verrouillage 3 tel que détaillé plus loin dans la description.

Pour cela, la bordure d'extrémité 1A du premier panneau 1 comprend au moins une mortaise 14 de premier panneau 1 encadrée par deux tenons 13 de premier panneau 1. De préférence, la bordure d'extrémité 1A du premier panneau 1 comprend une pluralité de mortaises 14 séparées par des tenons 13.

Les tenons 13 sont réalisés monobloc dans le plan 1B du panneau 1, cela par la découpe des mortaises 14 au niveau de sa bordure d'extrémité 1A.

L'épaisseur de ces tenons 13 correspond donc à l'épaisseur de panneau e.

Les tenons 13 sont délimités :
- par deux côtés latéraux 131, plans et parallèles entre eux
- une bordure d'extrémité 132, et
- deux faces parallèles 133, 134, planes, prolongeant chacune l'une des faces parallèles 11, 12 du panneau 1.
La bordure d'extrémité 132 des tenons 13 comprend ici une découpe en biais, de l'ordre de 45°, par rapport au plan de panneau 1B.

Chaque mortaise 14 est délimitée latéralement par des côtés latéraux 131 des deux tenons 13 qui l'encadrent (ou par un côté latéral 131 seulement d'un tenon 13 si la mortaise 14 se situe à l'une des extrémités du panneau 1). Et chaque mortaise 14 comprend également un fond de mortaise 141 plan.

Le fond de mortaise 141 plan s'étend ici perpendiculairement par rapport au plan de panneau 1B.

La bordure d'extrémité 2A du deuxième panneau 2 comprend au moins un tenon 23 de deuxième panneau 2 encadré par deux mortaises 24 de deuxième panneau 2. De préférence, la bordure d'extrémité 2A du deuxième panneau 2 comprend une pluralité de tenons 23 séparés par des mortaises 24.

Les tenons 23 sont réalisés monobloc dans le plan 2B du panneau 2, cela par la découpe des mortaises 24 au niveau de sa bordure d'extrémité 2A.

L'épaisseur de ces tenons 23 correspond donc à l'épaisseur de panneau d.

Les tenons 23 sont délimités :
- par deux côtés latéraux 231, plans et parallèles entre eux
- une bordure d'extrémité 232, et
- deux faces parallèles 233, 234, planes, prolongeant chacune l'une des faces parallèles 21, 22 du panneau 2.

Ici encore, La bordure d'extrémité 232 des tenons 13 comprend une découpe en biais, de l'ordre de 45°, par rapport au plan de panneau 2B.

Chaque mortaise 24 est délimitée latéralement par des côtés latéraux 231 des deux tenons 23 qui l'encadrent (ou par un côté latéral 231 seulement d'un tenon 23 si la mortaise 24 se situe à l'une des extrémités du panneau 2). Et chaque mortaise 24 comprend également un fond de mortaise 241 plan.

Le fond de mortaise 241 plan s'étend ici perpendiculairement par rapport au plan de panneau 2B.

Les tenons 13, 23 de l'un des panneaux 1, 2 comprennent chacun une face d'appui (en l'occurrence les faces d'appui 134 et 234) destinée à venir prendre appui contre l'un des fonds de mortaise 141, 241 de l'autre panneaux 1, 2.

Les tenons 13, 23 ainsi que les mortaises 14, 24 des deux panneaux 1 et 2 sont de préférence identiques (en forme et dimensions).

Comme on peut le voir sur les figures 1 et 2, les tenons 13, 23 des premier et deuxième panneaux 1, 2 comprennent une gorge de verrouillage 135, 235 ménagée dans leur face 133, 233 qui est opposée à leur face d'appui 134, 234

Ces gorges de verrouillage 135, 235 s'étendent selon un axe de gorge 1351, 2351, sur toute la longueur des tenons 13, 23, c'est-à-dire entre leurs deux côtés latéraux 131, 231. Et, sur une même bordure d'extrémité 1A, 2A, les axes de gorge 1351, 2351 des gorges de verrouillage 135, 235 de tous les tenons 13, 23 sont alignés et coaxiaux.

De plus, les gorges de verrouillage 135, 235 sont adaptées pour que les axes de gorge 1351, 2351 des deux bordures d'extrémités soient alignés et coaxiaux, une fois lesdits tenons 13, 23 et mortaises 14, 24 des deux panneaux 1,2 correctement emboités les uns dans les autres, c'est-à-dire lorsque les tenons 13, 23 de l'un des premier ou deuxième panneaux 1, 2 sont en appui par leur face d'appui 134, 234 contre les fonds de mortaises 141, 241 de l'autre des panneaux 1, 2.

On comprend qu'un tel alignement des axes de gorge 1351, 2351 crée un logement longitudinal dans lequel peut être insérée à force la clavette longitudinale de verrouillage 3 précitée, assurant alors l'assemblage et le verrouillage entre eux des premier et deuxième panneaux 1, 2 (figure 2).

Une fois les tenons 13, 23 d'un panneau 1, 2 emboités dans les mortaises 14, 24 de l'autre panneau 1,2, l'extrémité desdits tenons 13, 23 s'étend au-delà du plan de la face 133, 233 dans laquelle sont ménagées les gorges de verrouillage 135, 235.

La clavette longitudinale de verrouillage 3 consiste en une tige allongée de section constante adaptée à l'épaisseur e, d des panneaux 1, 2. Cette clavette longitudinale de verrouillage 3 peut être réalisée en bois ou tout autre matériau. Sa longueur correspond de préférence à la longueur des deux bordures de panneaux 1A, 2A que l'on souhaite assembler.

Les gorges de verrouillage 135, 235 sont réalisées en creux à partir de la face 133, 233 des tenons 13, 23, et elles débouchent donc dans cette face de tenon 133, 233, ainsi que dans leurs côtés latéraux 131, 231.

La section des gorges de verrouillage 135, 235 correspond à une partie de la section de la clavette longitudinale de verrouillage 3.

Dans le mode de réalisation illustré, la section de la clavette longitudinale de verrouillage 3 est circulaire et la section des gorges de verrouillage 135, 235 est demi-circulaire. Le diamètre de la clavette longitudinale de verrouillage peut par exemple être compris entre 0,5 et 1,5 cm.

D'autres formes de section de clavette et de gorge peuvent être envisagées, pourvu que la section des gorges de verrouillage 135, 235 corresponde à une partie de la section de la clavette longitudinale de verrouillage 3.
Par exemple, la clavette longitudinale de verrouillage peut avoir une section polygonale et la section des gorges de verrouillage peut alors correspondre à la moitié de la section de la clavette de verrouillage.

Comme on peut le voir sur la figure 2, les axes de gorge 1351, 2351 des gorges demi circulaires 135, 235 s'étendent dans le plan de la face 133, 233 des tenons 13, 23 qui est opposée à la face d'appui 134, 234.

D'autre part, on remarque que la distance entre l'axe de gorge 1351, 2351 et la projection orthogonale de cet axe de gorge 1351, 2351 sur le plan du fond de mortaise 141, 241 d'un panneau 1, 2, est égale à l'épaisseur de panneau e, d de l'autre panneau 1, 2.

On notera que dans une variante de réalisation les fonds de mortaise 141, 241 peuvent s'étendre dans un plan non perpendiculaire au plan de panneau 1B, 2B, cela pour obtenir un assemblage avec des plans de panneaux décalés d'un angle différent de 90°.

Comme on peut le voir sur la figure 2, l'assemblage par la clavette longitudinale de verrouillage 3 est obtenu du fait du décalage angulaire entre les deux panneaux 1, 2, le logement d'accueil de la clavette formé par la juxtaposition des gorges de verrouillage 135, 235, comprenant une section fermée sur plus de 180°.

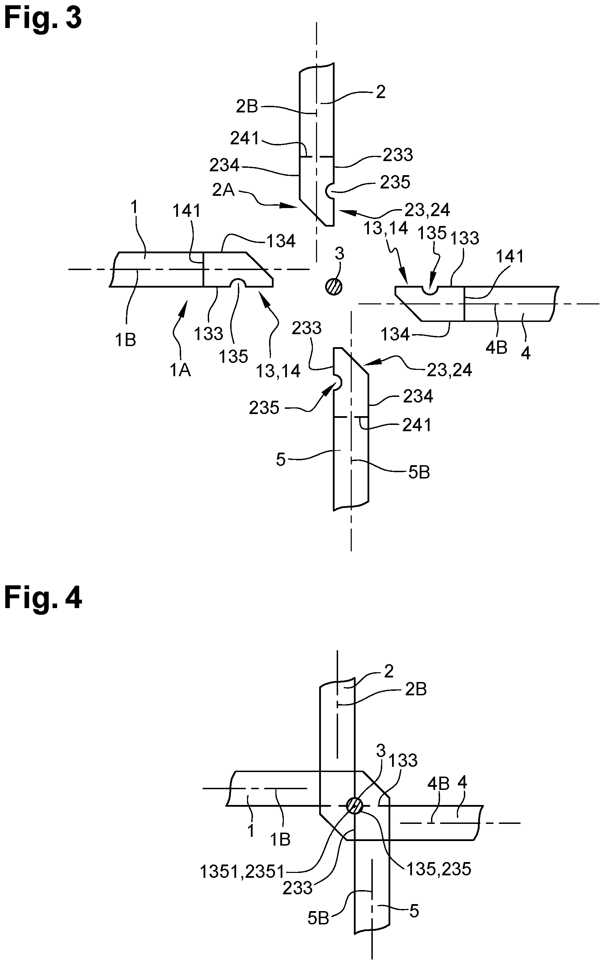

Tel qu'illustré sur les figures 3 et 4, le même principe d'assemblage peut être utilisé pour assembler entre elles les bordures d'extrémités 1A, 2A, 4A et 5A de quatre panneaux 1, 2, 4 et 5 au moyen d'une clavette longitudinale de verrouillage 3.

Ici, les bordures d'extrémité 1A, 1B des panneaux 1 et 2 sont identiques à celles des panneaux 1 et 2 du mode de réalisation illustré sur les figures 1 et 2.

La bordure d'extrémité 4A du panneau 4 est identique à la bordure d'extrémité 1A du panneau 1 ; et la bordure d'extrémité 5A du panneau 5 est identique à la bordure d'extrémité 2A du panneau 2.

Les plans de panneaux 1B, 2B, 4B, 5B des panneaux 1, 2, 4 et 5 sont décalés de 90°.

Les plans 1B, 4B des panneaux 1 et 4 sont disposés parallèlement l'un à l'autre. Leurs tenons 13 et mortaises 14 sont disposés en vis-à-vis, avec les faces de tenons 133 (opposées aux faces d'appui 134) en contact l'une avec l'autre.

De leur côté, les plans 2B, 5B des panneaux 2 et 5 sont disposés parallèlement l'un à l'autre. Et leurs tenons 23 et mortaises 24 sont disposés en vis-à-vis, avec les faces de tenons 233 (opposées aux faces d'appui 234) en contact l'une avec l'autre.

Comme on peut le voir sur la figure 4, le logement pour l'accueil de la clavette de verrouillage 3 (formé par la juxtaposition des gorges de verrouillage 135, 235), comprend ici une section fermée sur 360°.

On notera que les bordures d'extrémités situées de l'autre côté des panneaux peuvent comprendre une structure similaire de tenons et de mortaises pour réaliser un assemblage du même type, avec un ou plusieurs autres panneaux, au moyen d'une clavette longitudinale de verrouillage 3.

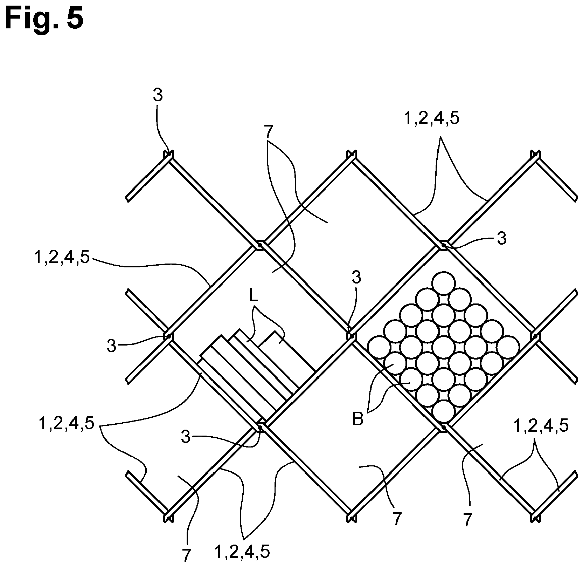

On a illustré sur la figure 5 une construction de panneaux en forme de structure d'étagère, obtenue au moyen d'une pluralité de panneaux assemblés entre eux par un système d'assemblage conforme à l'invention, tel qu'illustré sur les figures 1 à 4.

Cette structure d'étagère comprend une pluralité de compartiments 7 obtenus chacun par l'assemblage de quatre panneaux 1, 2, 4 et 5 au moyen d'une clavette longitudinale de verrouillage 3.

Les compartiments 7 ont une forme générale carrée et ils comportent une diagonale horizontale et une diagonale verticale.

En variante, les compartiments 7 peuvent être disposés avec leurs côtés verticaux et horizontaux.

Une telle structure d'étagère peut par exemple convenir pour le rangement de bouteilles B ou de livres L.

Le système d'assemblage selon l'invention peut être mis en œuvre pour obtenir d'autres constructions de panneaux, par exemple dans le domaine de l'agencement ou du mobilier.

## Revendications

1. Système d'assemblage entre des bordures d'extrémités (1A, 2A) d'au moins un premier panneau (1) et un deuxième panneau (2), lesquels premier panneau et deuxième panneau (1, 2) comprennent chacun un plan de panneau (1B, 2B) et deux faces parallèles (11, 12 ; 21, 22) séparées par une épaisseur de panneau (e, d), lesquels plans de panneau (1B, 2B) desdits premier panneau (1) et deuxième panneau (2) sont décalés angulairement,
lequel premier panneau (1) comprend une bordure d'extrémité (1A) comprenant au moins une mortaise (14) de premier panneau (1) encadrée par deux tenons (13) de premier panneau (1),
lequel deuxième panneau (2) comprend une bordure d'extrémité (2A) comprenant au moins un tenon (23) de deuxième panneau (2) encadré par deux mortaises (24) de deuxième panneau (2),
lesquelles mortaises (14, 24) de premier et de deuxième panneaux (1, 2) comprennent chacun un fond de mortaise (141, 241),
lesquels tenons (13, 23) de l'un desdits panneaux (1, 2) comprennent chacun une face d'appui (134, 234) destinée à venir prendre appui contre l'un desdits fonds de mortaise (141, 241) de l'autre desdits panneaux (1, 2),
**caractérisé en ce que**
lesdits tenons (13, 23) desdits premier et deuxième panneaux (1, 2) comprennent une gorge de verrouillage (135, 235) qui s'étend sur toute leur longueur selon un axe de gorge (1351, 2351),
lesquelles gorges de verrouillage (135, 235) sont ménagées dans la face (133, 233) desdits tenons (13, 23) qui est opposée à ladite face d'appui (134, 234),
lesquelles gorges de verrouillage (135, 235) sont adaptées pour que lesdits axes de gorge (1351, 2351) soient alignés lorsque lesdits tenons (13, 23) de l'un desdits premier ou deuxième panneaux (1, 2) sont en appui contre lesdits fonds de mortaises (141, 241) de l'autre desdits panneaux (1, 2),
et **en ce qu'**il comprend une clavette longitudinale de verrouillage (3) adaptée pour venir se loger dans lesdites gorges de verrouillage (135, 235) alignées, et assembler lesdits premier et deuxième panneaux (1, 2).

2. Système d'assemblage selon la revendication 1 **caractérisé en ce que** la section desdites gorges de verrouillage (135, 235) correspond à une partie de la section de ladite clavette longitudinale de verrouillage (3).

3. Système d'assemblage selon la revendication 2 **caractérisé en ce que** lesdites gorges de verrouillage (135, 235) ont une section demie circulaire, et **en ce que** ladite clavette longitudinale de verrouillage (3) a une section circulaire.

4. Système d'assemblage selon l'une quelconque des revendications 1 à 3 **caractérisé en ce que** lesdits axes de gorge (1351, 2351) s'étendent dans le plan de la face (133, 233) desdits tenons (13, 23) qui est opposée à ladite face d'appui (134, 234).

5. Système d'assemblage selon l'une quelconque des revendications 1 à 4 **caractérisé en ce que** la distance entre l'axe de gorge (1351, 2351) et la projection orthogonale de cet axe de gorge (1351, 2351) sur le plan du fond de mortaise (141, 241) d'un panneau (1, 2) est égale à l'épaisseur de panneau (e, d) de l'autre panneau (1, 2).

6. Système d'assemblage selon l'une quelconque des revendications 1 à 5 **caractérisé en ce que** sur chaque panneau (1, 2), lesdits fonds de mortaise (141, 241) s'étendent dans un plan perpendiculaire au plan de panneau (1B, 2B), les plans de panneaux (1B, 2B) desdits premier et deuxième panneaux (1, 2) s'étendant perpendiculairement entre eux.

7. Système d'assemblage selon l'une quelconque des revendications 1 à 6 **caractérisé en ce que** ladite clavette longitudinale de verrouillage (3) assure l'assemblage de quatre panneaux (1, 2, 4, 5) dont les plans de panneaux (1B, 2B, 4B, 5B) sont décalés de 90°, les tenons (13, 23) et mortaises (14, 24) des couples de panneaux (1, 5 - 2, 4) dont les plans de panneaux (1B, 5B - 2B, 4B) s'étendent parallèlement entre eux étant disposés en vis-à-vis.

8. Construction de panneaux comprenant une pluralité de panneaux assemblés entre eux, **caractérisée en ce qu'**elle comprend au moins deux panneaux dont des bordures d'extrémités sont assemblées entre elles par un système d'assemblage selon l'une quelconque des revendications 1 à 7.

9. Construction de panneaux selon la revendication 8, **caractérisée en ce qu'**elle consiste en une structure d'étagère.

10. Construction de panneaux selon la revendication 9, **caractérisée en ce qu'**elle consiste en une structure d'étagère en forme d'une pluralité de compartiments (7) juxtaposés par exemple pour le rangement de bouteilles (B), au moins certains desdits compartiments (7) ayant une forme générale carrée, constitués par l'assemblage de quatre panneaux, disposés avec une diagonale horizontale et une diagonale verticale.
